# EUROPEAN PATENT APPLICATION

(11) **EP 4 814 052 A1**
(43) Date of publication of application: **30.09.2026**
(21) Application number: 24894711.1
(22) Date of filing: 25.11.2024
(51) Int. Cl.: C08L 23/08, C08F 210/16, C08J 5/18, B29C 55/12

(54) **POLYETHYLENE RESIN COMPOSITION FOR BIAXIALLY ORIENTED FILM AND BIAXIALLY ORIENTED FILM COMPRISING SAME**

(30) Priority: 24.11.2023 KR 20230166030
(71) Applicant: Lotte Chemical Corporation, Seoul 05551 (KR)
(72) Inventor: CHOI, Byungdoo, Daejeon 34110 (KR); OH, Sunhyung, Daejeon 34110 (KR); KIM, Yongbin, Daejeon 34110 (KR); CHO, Jinju, Daejeon 34110 (KR)
(74) Representative: Germain Maureau
(86) International application number: PCT/KR2024/018740
(87) International publication number: WO 2025/110821

(57) **Abstract**

Disclosed is a polyethylene resin composition for a biaxially oriented film, which is moldable using a biaxial stretching machine in a wide stretching temperature range and exhibits improved mechanical properties and transparency along with excellent stretching properties. The present invention provides a polyethylene resin composition for a biaxially oriented film, including (A) 10 to 50 wt% of a copolymer of ethylene and olefin having 4 to 10 carbon atoms, the copolymer having a density of 0.880 to 0.910 g/cm³, and (B) 50 to 90 wt% of a copolymer of ethylene and olefin having 4 to 10 carbon atoms, the copolymer having a density of 0.935 to 0.955 g/cm³, wherein, as determined through Cross-Fractionation Chromatography (CFC) analysis, a fraction eluted at a temperature of 50°C or less is 16 to 40 wt%, a fraction eluted at a temperature of 91°C or more is 30 to 60 wt%, and a molecular weight distribution (MWD, Mw/Mn) is 8 to 20.

## Description

### TECHNICAL FIELD

The present invention relates to a polyethylene resin composition and a biaxially oriented film including the same, and more particularly, to a polyethylene resin composition for a biaxially oriented film and a biaxially oriented film including the same.

This application claims the benefit of Korean Patent Application No. 10-2023-0166030, filed on 11/24/2023, in the Korean Intellectual Property Office, the disclosure of which is incorporated herein in its entirety by reference.

### BACKGROUND ART

In the plastic-related industry, a market environment is rapidly changing with the emergence of new issues, including marine plastic issues. Container packaging materials, which are used in large quantities, are no exception, and beyond packaging material production, processed food/beverage and distribution fields are also being required to respond to environmental issues such as plastic waste and greenhouse gas reduction.

In particular, packaging container-related companies recognize the need to focus on developing materials capable of reducing environmental burdens, and globally, the development and use of uni-material related products based on recycling and bio-plastics contributing to carbon dioxide (CO₂) reduction are expanding.

In the EU, a packaging consortium (CEPLEX, A Circular Economy for Flexible Packaging) is formed among resin makers producing polyethylene film raw materials, film producers, converters, and food/product brand owners, thereby shifting a technical trend from typical multi-layer film-oriented packaging having different materials applied to uni-material-oriented packaging having single polyolefin-based and some barrier materials applied. Through such efforts, the establishment and implementation of transnational regulations are pursued to ensure recyclability for packaging applications and to aim for industrial transition in terms of a circular economy and energy efficiency. When these efforts lead to practical regulations, the majority of the packaging industry may require recyclability and energy circulation as essential property requirements, in addition to the current packaging trends that reflect various characteristics for each application.

In addition, high-density biaxially stretched polyethylene resin compositions are being researched and developed to improve heat resistance properties for the applications, but cases of film compositions possessing satisfactory stretching properties and mechanical properties have not yet been presented.

Furthermore, as recovery and recycling systems for polyethylene products in North America are being improved and established, the uni-material trend is projected to become mainstream. Accordingly, some companies are focusing on achieving polyethylene-based uni-materials with the goal of replacing nylon/polyethylene compositions, while other companies are seeking to transition pouch materials used for film applications with excessive functionality (such as dried fruit, frozen food, and pet food) from PET/PE systems to PE-oriented uni-material packaging.

Meanwhile, in biaxially oriented films, replacing layers typically used as BOPA (biaxially oriented polyamide) or BOPET (biaxially oriented polyethylene terephthalate) with BOPE (biaxially oriented polyethylene) to implement uni-materials may align with such development trends, but cases demonstrating satisfactory stretching properties as polyethylene that is moldable using a biaxial stretching machine have not yet been presented.

Korean Patent Registration No. 0746253 discloses a polyethylene-based stretched film capable of uniform stretching and exhibiting excellent Elmendorf tear strength. However, it is difficult to obtain satisfactory strength properties when performing biaxial stretching with the actual composition presented.

Japanese Patent Registration No. 4498913 discloses a biaxially stretched ethylene polymer multi-layer film that is easily torn in both machine and transverse directions and exhibits excellent transparency, shrinkage, heat sealability, and flex resistance, but the patent does not describe a method for improving mechanical properties while having a wide processing range.

### DISCLOSURE OF THE INVENTION

### TECHNICAL PROBLEM

An aspect of the present invention provides a polyethylene resin composition for a biaxially oriented film, which is moldable using a biaxial stretching machine in a wide stretching temperature range and exhibits improved mechanical properties and transparency along with excellent stretching properties, and a biaxially oriented film including the same.

### TECHNICAL SOLUTION

According to an aspect of the present invention, there is provided a polyethylene resin composition for a biaxially oriented film, including (A) 10 to 50 wt% of a copolymer of ethylene and olefin having 4 to 10 carbon atoms, the copolymer having a density of 0.880 to 0.910 g/, and (B) 50 to 90 wt% of a copolymer of ethylene and olefin having 4 to 10 carbon atoms, the copolymer having a density of 0.935 to 0.960 g/cm³, wherein, as determined through Cross-Fractionation Chromatography (CFC) analysis, a fraction eluted at a temperature of 50°C or less is 16 to 40 wt%, a fraction eluted at a temperature of 91°C or more is 30 to 60 wt%, and a molecular weight distribution (MWD, Mw/Mn) is 8 to 20.

According to an embodiment of the present invention, the copolymer (A) has a melt index (190°C, 2.16-kg load) of 4 to 25 g/10 min, and the copolymer (B) has a melt index (190°C, 2.16-kg load) of 0.2 to 1.5 g/10 min.

According to another embodiment of the present invention, the copolymer (B) has a weight average molecular weight (Mw) of 180,000 to 250,000 g/mol and a molecular weight distribution (MWD, Mw/Mn) of 10 to 30.

According to another embodiment of the present invention, the resin composition has a melt index (190°C, 2.16-kg load) of 0.5 to 3 g/10 min and a density of 0.920 to 0.955 g/cm³.

According to another aspect of the present invention, there is provided a biaxially oriented film including the resin composition.

According to an embodiment of the present invention, the film has a tensile strength of 800 kgf/cm² or more in each of a machine direction and a transverse direction, a haze of 10% or less, and a shrinkage rate of 5% or less, as measured under following conditions.

### [Measurement method]

A biaxially stretched film having a thickness of 30 µm and a width of 1 m is prepared using the resin composition under conditions of a molding speed of 100 m/min, a machine direction (MD) stretching ratio of 5 times and a stretching temperature of 105 to 120°C, and a transverse direction (TD) stretching ratio of 9 times and a stretching temperature of 120 to 130°C, and a biaxially stretched film specimen is measured for tensile strength using a tensile tester (model: Instron, 4466) under conditions of a load cell of 100 N and a test speed of 500 mm/min in accordance with ASTM D882, the specimen is measured for haze using a haze meter (model: Nippon Denshoku, NDH5000) in accordance with ASTM D1003, and a specimen is cut and sampled in a 50 mm × 50 mm square shape from the biaxially stretched film, placed in a convection oven at 100°C for 5 minutes, and then measured for length dimensions to calculate shrinkage rate in each of the MD and the TD according to below:

$Shrinkage Race \left(%\right) = \frac{Initial Length \left(mm\right) - Length after Shrinkage \left(mm\right)}{Initial Length \left(mm\right)} .$

### ADVANTAGEOUS EFFECTS

According to the present invention, a polyethylene resin composition for a biaxially oriented film, which is moldable using a biaxial stretching machine in a wide stretching temperature range and exhibits improved mechanical properties and transparency along with excellent stretching properties, as a polyethylene resin composition having fraction characteristics according to specific CFC analysis and a specific level of molecular weight distribution, where a copolymer of ethylene and olefin having 4 to 10 carbon atoms with different densities within a certain range is mixed, and a biaxially oriented film including the same may be provided.

### BRIEF DESCRIPTION OF THE DRAWINGS

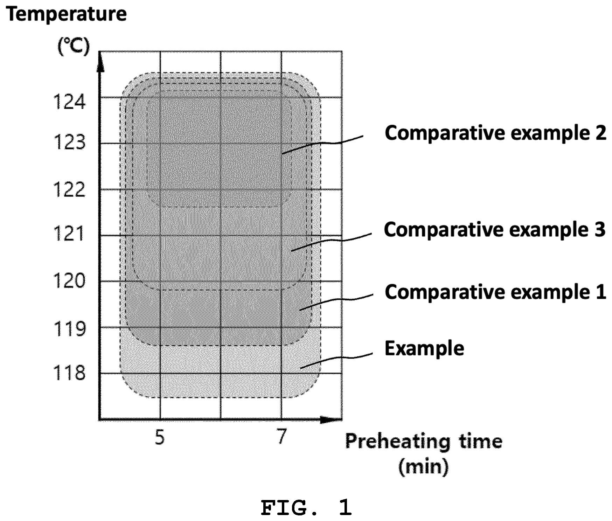

FIG. 1 is a graph showing results of measuring preheating temperature and time range enabling stretching 5 times at an MD and 9 times in a TD without breakage in Experimental Example 1.

### MODE FOR CARRYING OUT THE INVENTION

Hereinafter, the present invention will be described in detail through preferred embodiments. Before getting to the point, it will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention. Thus, configurations of embodiments described herein are simply the most preferable embodiments of the present invention and are not representative of all the technical spirits of the invention, and thus it should be understood that there may exist various equivalents and modified examples as substitutes at the time when the present invention is filed.

In a condition where a composition which is moldable using a biaxial stretching machine in a wide temperature range and exhibits satisfactory stretching properties has not yet been presented for replacing layers typically used as BOPA or BOPET with BOPE to implement uni-materials, the present inventors found that a polyethylene resin composition having fraction characteristics according to specific Cross-Fractionation Chromatography (CFC) analysis and a specific level of molecular weight distribution, where a copolymer of ethylene and olefin having 4 to 10 carbon atoms with different densities within a certain range is mixed, is moldable using a biaxial stretching machine in a wide temperature range and exhibits improved mechanical properties and transparency along with excellent stretching properties, thereby leading to the present invention.

Therefore, the present invention provides a polyethylene resin composition for a biaxially oriented film, including (A) 10 to 50 wt% of a copolymer of ethylene and olefin having 4 to 10 carbon atoms, the copolymer having a density of 0.880 to 0.910 g/cm³, and (B) 50 to 90 wt% of a copolymer of ethylene and olefin having 4 to 10 carbon atoms, the copolymer having a density of 0.935 to 0.960 g/cm³, wherein, as determined through Cross-Fractionation Chromatography (CFC) analysis, a fraction eluted at a temperature of 50°C or less is 16 to 40 wt%, a fraction eluted at a temperature of 91°C or more is 30 to 60 wt%, and a molecular weight distribution (MWD, Mw/Mn) is 8 to 20.

In the present invention, the copolymer (A) is an ultra-low-density polyethylene, and may have a density of 0.880 to 0.910 g/cm³, and preferably 0.890 to 0.900 g/cm³. When the density is out of the range, biaxial stretching molding is not achievable.

Furthermore, as the copolymer (A), a copolymer of ethylene and α-olefin such as propylene, 1-butene, 1-hexene, or 1-octene may be used, and preferably, a copolymer of ethylene and 1-butene may be used, and the copolymer may have a melt index (190°C, 2.16-kg load) of 4 to 25 g/10 min, and preferably 10 to 20 g/10 min. When a copolymer prepared using an α-olefin other than 1-butene as a comonomer copolymerized with ethylene is applied, or when the melt index is out of the range, there may be limitations in broadening a stretching processing temperature range, or biaxial stretching molding may not be achievable. The polymerization method of the copolymer (A) is not particularly limited, and the copolymer (A) may be prepared through any method such as a gas phase method, a solution method, or a slurry method.

The copolymer (A) may be included in an amount of 10 to 50 wt% with respect to a total resin composition, and preferably may be included in an amount of 20 to 40 wt%. When the amount of the copolymer (A) is out of the range, biaxial stretching molding is also not achievable.

In the present invention, the copolymer (B) is a linear low-density polyethylene, and may have a density of 0.935 to 0.960 g/cm³, and preferably 0.940 to 0.960 g/cm³. When the density is out of the range, biaxial stretching molding is not achievable.

As the copolymer (B), a copolymer of ethylene and α-olefin such as propylene, 1-butene, 1-hexene, or 1-octene may be used, and preferably, a copolymer of ethylene and 1-butene may be used, and the copolymer may have a melt index (190°C, 2.16-kg load) of 0.2 to 1.5 g/10 min, and preferably 0.5 to 1.0 g/10 min. When a copolymer prepared using an α-olefin other than 1-butene as a comonomer copolymerized with ethylene is applied, or when the melt index is out of the range, there may be limitations in broadening a stretching processing temperature range, or biaxial stretching molding may not be achievable. The polymerization method of the copolymer (B) is not particularly limited, and the copolymer (B) may be prepared through any method such as a gas phase method, a solution method, or a slurry method.

The copolymer (B) may be included in an amount of 50 to 90 wt% with respect to a total resin composition, and preferably may be included in an amount of 60 to 80 wt%. When the amount of the copolymer (B) is out of the range, biaxial stretching molding is not achievable.

According to the mixing of the copolymer (A) and the copolymer (B) as described above, a final resin composition may have a melt index (190°C, 2.16-kg load) of 0.5 to 3 g/10 min, and preferably 1 to 2 g/10 min, and may have a density of 0.920 to 0.955 g/cm³, and preferably 0.930 to 0.955 g/cm³.

In the present invention, it is confirmed that stretching properties and stretching processing temperature characteristics may be improved by adjusting the molecular weight properties of a resin composition. Specifically, when adjusting the molecular weight distribution (MWD, Mw/Mn) of the polyethylene resin composition to 8 to 20, preferably 9 to 15 by applying the copolymer (B) having a weight average molecular weight (Mw) of 180,000 to 250,000 g/mol and a molecular weight distribution (MWD, Mw/Mn) of 10 to 30, preferably a weight average molecular weight (Mw) of 200,000 to 230,000 g/mol and a molecular weight distribution (MWD, Mw/Mn) of 15 to 20, molding may be achieved using a biaxial stretching machine in a wide stretching temperature range, and improved mechanical properties and transparency along with excellent stretching properties may be achieved.

In addition, in the present invention, it is confirmed that the polyethylene resin composition having the composition described above exhibits smooth moldability and achieves satisfactory strength properties when having fraction characteristics according to a certain CFC analysis upon being molded into a biaxially oriented film, thereby further broadening a stretching processing temperature range through improved low-temperature stretching properties. Specifically, in the resin composition according to the present invention, as determined through CFC analysis, a fraction eluted at a temperature of 50°C or less may be 16 to 40 wt% and a fraction eluted at a temperature of 91°C or more may be 30 to 60 wt%, and preferably, a fraction eluted at a temperature of 50°C or less may be 25 to 40 wt% and a fraction eluted at a temperature of 91°C or more may be 30 to 50 wt%.

In the polyethylene resin composition for a biaxially oriented film according to the present invention, general polyethylene additives may be added for application in various uses. For example, antioxidants, heat and light stabilizers, antistatic agents, lubricants, anti-blocking agents, preservatives, processing aids, slip agents, anti-adhesive agents, pigments, flame retardants, foaming agents, and the like may be added in an appropriate amount and used.

The polyethylene resin composition for a biaxially oriented film according to the present invention may be prepared by mixing and extruding the components according to typical methods known in the art. For example, the components may be fed into a twin-screw extruder and melt-kneaded to prepare a polyethylene resin composition for a biaxially oriented film.

The polyethylene resin composition for a biaxially oriented film according to the present invention as described above enables biaxial stretching molding in a wide stretching temperature range and exhibits improved mechanical properties and transparency along with excellent stretching properties. Specifically, a biaxially oriented film prepared from the polyethylene resin composition for a biaxially oriented film according to the present invention may have a tensile strength of 800 kgf/cm² or more in each of a machine direction and a transverse direction, preferably 1,200 kgf/cm² or more, a haze of 10% or less, preferably 2% or less, and a shrinkage rate of 5% or less, as measured under following conditions.

### [Measurement method]

A biaxially stretched film having a thickness of 30 µm and a width of 1 m is prepared using the resin composition under conditions of a molding speed of 100 m/min, a machine direction (MD) stretching ratio of 5 times and a stretching temperature of 105 to 120°C, and a transverse direction (TD) stretching ratio of 9 times and a stretching temperature of 120 to 130°C, and a biaxially stretched film specimen is measured for tensile strength using a tensile tester (model: Instron, 4466) under conditions of a load cell of 100 N and a test speed of 500 mm/min in accordance with ASTM D882, the specimen is measured for haze using a haze meter (model: Nippon Denshoku, NDH5000) in accordance with ASTM D1003, and a specimen is cut and sampled in a 50 mm × 50 mm square shape from the biaxially stretched film, placed in a convection oven at 100°C for 5 minutes, and then measured for length dimensions to calculate shrinkage rate in each of the MD and the TD according to Equation 1 below:

$Shrinkage Race \left(%\right) = \frac{Initial Length \left(mm\right) - Length after Shrinkage \left(mm\right)}{Initial Length \left(mm\right)} .$

Hereinafter, the present invention will be described in more detail through specific Examples and Comparative Examples. In Examples and Comparative Examples, density, melt index, thermal properties, molecular weight properties, and CFC analysis were measured according to the following methods.

### [Measurement methods]

### (1) Density

Density was measured in accordance with ASTM D1505.

### (2) Melt Index (MI)

In according with ASTM D1238, melt index was measured under a load of 2.16 kg at 190°C.

### (3) Thermal properties

10 mg of a specimen was pre-melted at 220°C for 5 minutes in a nitrogen gas atmosphere using a differential scanning calorimeter (DSC, TA Instruments), and then the temperature was dropped to 40°C at a cooling rate of 10°C/min. Thereafter, the temperature was raised at a heating rate of 10°C/min, and a peak temperature of a maximum peak of an obtained melting endothermic curve was defined as a melting point (Tm). In addition, a crystallization temperature (Tc) was measured while a sample was heated to 200°C at a heating rate of 10°C/min and then cooled to -50°C at a rate of - 10°C/min.

### (4) Molecular weight properties

Molecular weight properties was measured through GPC analysis method in accordance with ASTM D3536.

### (5) Cross-Fractionation Chromatography (CFC) analysis

CFC analysis was performed on a CFC instrument from Polymer Char (Valencia, Spain). The instrument includes a TREF column in a first dimension, a set of GPC columns in a second dimension, and an infrared detector (IR4 from Polymer Char) downstream of the GPC columns. A sample to be analyzed was stirred at 150°C for 80 minutes, and dissolved in 1,2,3-trichlorobenzene at a concentration of about 2.5 mg/mℓ. The solution was loaded into a center of the TREF column, stabilized at 100°C for 45 minutes, and then slowly cooled to 35°C (0.5°C/min) to crystallize a polymer. After maintaining the low temperature for 10 minutes, a soluble fraction was injected into the GPC columns. All GPC analyses were performed using 1,2,4-trichlorobenzene as a solvent at 1 mℓ/min and a column temperature of 140°C or less in an "overlapped GPC injection" mode.

### Examples and Comparative Examples

In Example and Comparative Examples 2 and 3, two types of copolymers having the physical properties shown in Table 1 below were fed into a twin-screw extruder and melt-kneaded under conditions of 180 to 220°C to prepare a pellet-type polyethylene resin composition having the physical properties shown in Table 1, and in Comparative Example 1, a commercially available polyethylene resin composition (INNATE TF80, Dow Chemical Co.) was separately prepared.

**[Table 1]**

| Measurement items | | | Comparative Example 1 | Comparative Example 2 | | Comparative Example 3 | | Example 1 | |
|---|---|---|---|---|---|---|---|---|---|
| Final melt index (190°C, 2.16 kg) | | | 1.7 | 1.8 | | 0.8 | | 1, 4 | |
| Final density (g/cm³) | | | 0.928 | 0.928 | | 0.933 | | 0.930 | |
| DSC | Melting point (Tm) | | 125.3 | 125.1 | | 125.6 | | 125.5 | |
| | Crystall ization temperat ure (Tc) | | 113.3 | 113.0 | | 113.1 | | 112.9 | |
| GPC | Mw | | 115,800 | 107,700 | | 184,400 | | 166,700 | |
| | Mz | | 335,100 | 318,700 | | 816.500 | | 689,700 | |
| | MWD (Mw/Mn) | | 4.17 | 3.94 | | 11.78 | | 9.71 | |
| Comonomer type | | | C8 | C4/C8 | | C4/C8 | | C4 | |
| a-TREF weight fraction (%) | < 50°C | | 16.4 | 14.6 | | 15.2 | | 34.5 | |
| | > 91°C | | 52.8 | 47.3 | | 40.1 | | 36.6 | |
| Copolymer | | | - | A | C | B | C | B | D |
| Comonomer type | | | | C4 | C8 | C4 | C8 | C4 | C4 |
| Melt index (190°C, 2.16 kg) | | | - | 1.5 | 4.0 | 0.8 | 4.0 | 0.8 | 18.0 |
| Density (g/cm³) | | | - | 0.938 | 0.905 | 0.945 | 0.905 | 0.945 | 0.89 0 |
| Weight average molecular weight (Mw) | | | | 113,80 0 | 94,400 | 219,50 0 | 94,400 | 219,50 0 | 54,0 00 |
| Molecular weight distribution (MWD, Mw/Mn) | | | - | 3.88 | 4.12 | 15.9 | 4.12 | 15.9 | 2.14 |
| Composition ratio (wt%) | | | - | 70 | 30 | 70 | 30 | 70 | 30 |
| * Note | | | | | | | | | |
| - Copolymers A and B: Linear low-density polyethylene | | | | | | | | | |
| - Copolymers C and D: Ultra-low density polyethylene | | | | | | | | | |

### Experimental Example 1

In this experiment, a 5×9 stretching possibility for each temperature was determined by utilizing a laboratory stretching machine. To this end, compression molding was performed on each of the prepared pellets by utilizing a 190°C press machine, and sheet samples having a thickness of 1.3 mm, a width of 10 cm, and a length of 10 cm were prepared. Thereafter, preheating was performed within specific temperature and time conditions by utilizing a laboratory stretching machine, and the sheet samples were subjected to mechanical stretching 5 times in an MD (machine direction) and then mechanical stretching 9 times in a TD (transverse direction) (sequential stretching), and then the preheating temperature and time ranges, in which the stretching films are stretched 5 times in the MD and 9 times in the TD without breakage, were measured, and the results are shown in FIG. 1.

Referring to FIG. 1, it is confirmed that when the resin composition has a narrow molecular weight distribution of 5 or less (Comparative Example 2), the resin composition has a very narrow processing temperature condition within 3°C due to reduced stretchability. In contrast, when the resin composition has a broad molecular weight distribution of 9 or more (Example), the resin composition has a broader temperature condition to a level of about 7°C, and exhibits improved preheating temperature conditions by 1°C compared to a typical C8-based commercial product (Comparative Example 1).

Meanwhile, it is confirmed that when comparing properties of each prepared resin, melting points and crystallization temperatures based on DSC are not significantly different, but when comparing Comparative Examples 2 and 3, applying a copolymer having broad molecular weight properties with a weight average molecular weight (Mw) of 200,000 or more and a molecular weight distribution of 15 or more under the same weight ratio conditions is more beneficial for stretchability.

In addition, it is seen that when comparing Comparative Example 3 and Example, a copolymer having the molecular weight properties described above is applied for both, but when a copolymer that increases an elution weight fraction at 50°C or less based on CFC analysis is applied (Example), low-temperature stretching properties are improved, and thus Example exhibits improved stretchability in a low-temperature range by about 2°C or more compared to Comparative Example 3. From the results, it may be concluded that when a resin composition having a broad molecular weight distribution and an elution weight fraction at 50°C or less of a certain level or more based on CFC analysis is applied, stretching properties are further improved, and thus a broader range of stretching processing temperature characteristics may be achieved.

### Experimental Example 2

This experiment relates to an evaluation of a tenter-frame biaxial stretching line, and as in the evaluation through the laboratory stretching machine, sequential stretching (performing stretching in the MD followed by stretching in the TD (TDO)) was used. The stretching in the MD (MDO) is performed by attaching a sheet extruded through a T-die to rolls set at a temperature below the melting point of a resin to proceed with preheating required for stretching, and then carrying out mechanical stretching and resin orientation within a gap between rolls having different rotation speeds after a specific number of preheated rolls. As such, stretching was performed 5 times in the MD, as in the evaluation using the laboratory stretching machine. Thereafter, edges of the stretched film are held by appropriate clips and fed into a heating chamber, where preheating is performed for a certain distance, and then the film is stretched about 9 times in the TD. In the TDO stretching, compared to the roll-attachment type MDO stretching having relatively high thermal energy exchange efficiency, stretching is performed at a higher temperature than an MDO stretching temperature by supplying thermal energy required for stretching through a method of blowing heated air onto a film to be stretched. In practice, the stretching temperature is set to a temperature at or above a melting point of a resin, but because film residence time is very short, the temperature at or above a melting point is set. Detailed conditions for a biaxial stretching line process are shown in Table 2 below.

**[Table 2]**

| | |
|---|---|
| Processing temperature inside extruder | 230-250°C |
| Extrusion cooling roll temperature | 30-60°C |
| Extrusion cooling roll speed | 10-40 m/min |
| MDO stretching roll temperature | 105-120°C |
| MDO stretching ratio | 3:1-5:1 |
| TDO stretching zone temperature | 120-125°C |
| TDO stretching ratio | 9:1 |

Resin compositions according to each Comparative Example and Example were extruded under the above conditions to prepare films through a tenter-frame BOPE line under processing conditions shown in Table 3 below, and physical properties of the prepared films were measured through the following methods, and the results are shown in Table 4 below.

### [Measurement methods]

### (1) Tensile Strength

A biaxially stretched film having a thickness of 30 µm and a width of 1 m was prepared using the resin composition under conditions of a molding speed of 100 m/min, a machine direction (MD) stretching ratio of 5 times and a stretching temperature of 105 to 120°C, and a transverse direction (TD) stretching ratio of 9 times and a stretching temperature of 120 to 130°C, and a biaxially stretched film specimen was measured for tensile strength using a tensile tester (model: Instron, 4466) under conditions of a load cell of 100 N and a test speed of 500 mm/min in accordance with ASTM D882.

### (2) Haze

The specimen was measured for haze using a haze meter (model: Nippon Denshoku, NDH5000) in accordance with ASTM D1003.

### (3) Thermal Shrinkage Rate

A biaxially stretched film was prepared in the same manner as in the measurement of tensile strength, and a specimen was cut and sampled in a 50 mm × 50 mm square shape from the biaxially stretched film, placed in a convection oven at 100°C for 5 minutes, and then measured for length dimensions to calculate shrinkage rate in each of the MD and the TD according to Equation 1 below.$Shrinkage Race \left(%\right) = \frac{Initial Length \left(mm\right) - Length after Shrinkage \left(mm\right)}{Initial Length \left(mm\right)}$

### (4) Modulus of Elasticity

A biaxially stretched film was prepared in the same manner as in the measurement of tensile strength, and a biaxially stretched film specimen was measured for tensile strength and elongation according to ASTM D882 using a tensile tester (model: Instron, 4466) under conditions of a load cell of 100 N and a test speed of 500 mm/min, and a value corresponding to a tangent slope within an initial linear region of a stress-strain curve obtained through the measurement method was extracted and then quantified as modulus of elasticity.

**[Table 3]**

| Processing condition | MI (g/10 min) | Density (g/cm³) | MDO (°C_) | | | | | TDO (°C_) | | | | |
|---|---|---|---|---|---|---|---|---|---|---|---|---|
| | | | Preheating | | Stretching | | Annealing | Preheating | | Stretching | | Annealing |
| | | | In | Out | In | Out | | In | Out | In | Out | |
| Comparative Example 1 | 1.7 | 0.928 | 110 | 106 | 105 | 105 | 108 | 132 | 132 | 122 | 120 | 130 |
| Comparative Example 2 | 1.8 | 0.928 | Early breakage at low MD stretching ratio | | | | | | | | | |
| Comparative Example 3 | 0.8 | 0.933 | 110 | 107 | 106 | 106 | 108 | 134 | 134 | 123 | 121 | 132 |
| Example | 1.4 | 0.930 | 110 | 105 | 104 | 104 | 108 | 131 | 131 | 120 | 120 | 128 |

**[Table 4]**

| Evaluation items | MI (g/10 min) | Density (g/cm³) | Haze (%) | Thermal Shrinkage Rate (%) (100°C_/5 min) | | Tensile Strength (kgf/cm³) | | Modulus of Elasticity (MPa) | |
|---|---|---|---|---|---|---|---|---|---|
| | | | | MD | TD | MD | TD | MD | TD |
| Comparative Example 1 | 1.7 | 0.928 | 2.3 | 5 | 5 | 1,172 | 2,007 | 346 | 511 |
| Comparative Example 2 | 1.8 | 0.928 | Maximum stretching ratio: MD 3.6 × TD 9 (breakage upon increasing MD stretching ratio) | | | | | | |
| Comparative Example 3 | 0.8 | 0.933 | 4.7 | 5 | 5 | 1,304 | 2,093 | 523 | 904 |
| Example | 1.4 | 0.930 | 1.4 | 5 | 5 | 1,314 | 2,107 | 515 | 898 |

Referring to Tables 3 and 4, first, when the resin composition had a narrow molecular weight distribution of 5 or less (Comparative Example 2), a target stretching ratio of MD 5 times and TD 9 times was not achieved despite multiple temperature adjustments, and film breakage occurred within a TDO stretching zone at a stretching ratio of MD 3.6 times or more.

Next, when comparing the lowest stretching processing temperature conditions capable of achieving MD 5 times and TD 9 times, it was found that when using a polyethylene resin composition having fraction characteristics according to a specific CFC analysis and having a specific level of molecular weight distribution according to the present invention (Example), a BOPE film was prepared under lower MDO and TDO temperature conditions compared to Comparative Examples 1 and 3 in the preparation process, and this result demonstrated that a processing temperature range was wide.

In this regard, the characteristic of a wide processing temperature range provides a benefit of particularly improving transparency among properties of a biaxially stretched polyethylene film. For example, when a film is prepared under low stretching/annealing temperature conditions, an effect of improving film transparency may be obtained due to a small crystal size characteristic resulting from fast crystallization time in a crystal structure within the film, and it is confirmed that a film prepared using the resin composition according to Example capable of being stretched under low temperature conditions has lower haze compared to Comparative Examples 1 and 3. In addition, it is confirmed that in tensile strength, thermal shrinkage rate, and modulus of elasticity properties, the film has physical properties equivalent to or higher than properties of a commercial product (Comparative Example 1).

The preferred embodiments of the present invention have been described. The description of the present invention has been presented for purposes of illustration, and it will be understood by those skilled in the art that other specific modifications may be easily made without changing the technical idea or essential features thereof.

Therefore, the scope of the present invention is represented by the following claims rather than the above detailed description, and all changes and changed forms derived from the meaning, scope, and equivalent concepts of the claims should be construed as being included in the scope of the present invention.

## Claims

1. A polyethylene resin composition for a biaxially oriented film, comprising:
(A) 10 to 50 wt% of a copolymer of ethylene and olefin having 4 to 10 carbon atoms, the copolymer having a density of 0.880 to 0.910 g/cm³; and
(B) 50 to 90 wt% of a copolymer of ethylene and olefin having 4 to 10 carbon atoms, the copolymer having a density of 0.935 to 0.960 g/cm³,
wherein, as determined through Cross-Fractionation Chromatography (CFC) analysis, a fraction eluted at a temperature of 50°C or less is 16 to 40 wt%, a fraction eluted at a temperature of 91°C or more is 30 to 60 wt%, and a molecular weight distribution (MWD, Mw/Mn) is 8 to 20.

2. The polyethylene resin composition for a biaxially oriented film of claim 1, wherein the copolymer (A) has a melt index (190°C, 2.16-kg load) of 4 to 25 g/10 min, and the copolymer (B) has a melt index (190°C, 2.16-kg load) of 0.2 to 1.5 g/10 min.

3. The polyethylene resin composition for a biaxially oriented film of claim 1, wherein the copolymer (B) has a weight average molecular weight (Mw) of 180,000 to 250,000 g/mol and a molecular weight distribution (MWD, Mw/Mn) of 10 to 30.

4. The polyethylene resin composition for a biaxially oriented film of claim 1, wherein the resin composition has a melt index (190°C, 2.16-kg load) of 0.5 to 3 g/10 min and a density of 0.920 to 0.955 g/cm³.

5. A biaxially oriented film comprising the resin composition according to any one of claims 1 to 4.

6. The biaxially oriented film of claim 5, wherein the film has a tensile strength of 800 kgf/cm² or more in each of a machine direction and a transverse direction, a haze of 10% or less, and a shrinkage rate of 5% or less, as measured under following conditions:
[measurement method]
a biaxially stretched film having a thickness of 30 µm and a width of 1 m is prepared using the resin composition under conditions of a molding speed of 100 m/min, a machine direction (MD) stretching ratio of 5 times and a stretching temperature of 105 to 120°C, and a transverse direction (TD) stretching ratio of 9 times and a stretching temperature of 120 to 130°C, and a biaxially stretched film specimen is measured for tensile strength using a tensile tester (model: Instron, 4466) under conditions of a load cell of 100 N and a test speed of 500 mm/min in accordance with ASTM D882, the specimen is measured for haze using a haze meter (model: Nippon Denshoku, NDH5000) in accordance with ASTM D1003, and a specimen is cut and sampled in a 50 mm × 50 mm square shape from the biaxially stretched film, placed in a convection oven at 100°C for 5 minutes, and then measured for length dimensions to calculate shrinkage rate in each of the MD and the TD according to Equation 1 below: $Shrinkage Race \left(%\right) = \frac{Initial Length \left(mm\right) - Length after Shrinkage \left(mm\right)}{Initial Length \left(mm\right)} .$
